# EUROPÄISCHE PATENTSCHRIFT

(11) **EP 2 415 161 B1**
(45) Veröffentlichungstag und Bekanntmachung des Hinweises auf die Patenterteilung: **30.03.2016**
(21) Anmeldenummer: 10719283.3
(22) Anmeldetag: 31.03.2010
(51) Int. Cl.: H02P 6/00, A47B 9/04

(54) **LINEARANTRIEB UND TISCH MIT LINEARANTRIEB SOWIE MOTOR FÜR DEN LINEARANTRIEB**
LINEAR DRIVE, TABLE HAVING A LINEAR DRIVE, AND MOTOR FOR THE LINEAR DRIVE
ENTRAÎNEMENT LINÉAIRE ET TABLE ÉQUIPÉE D'UN ENTRAÎNEMENT LINÉAIRE AINSI QUE MOTEUR POUR LEDIT ENTRAÎNEMENT LINÉAIRE

(30) Priorität: 31.03.2009 DE 102009015690
(43) Veröffentlichungstag der Anmeldung: 08.02.2012
(73) Patentinhaber: Logicdata Electronic&Software Entwicklungs GmbH, 8530 Deutschlandsberg (AT)
(72) Erfinder: KOCH, Walter, A-8541 Schwanberg (AT); SILBER, Siegfried, A-4202 Kirchschlag (AT); GRABNER, Herbert, A-4040 Linz (AT); HUTTERER, Peter, A-4073 Wilhering (AT)
(74) Vertreter: Epping - Hermann - Fischer
(86) Internationale Anmeldenummer: PCT/EP2010/054379
(87) Internationale Veröffentlichungsnummer: WO 2010/112574

(56) Entgegenhaltungen:
- EP-A1- 0 283 103
- EP-A1- 1 273 247
- WO-A1-01/71218
- US-A1- 2004 100 169
- "PANdrive PD-170-57andTMCM-170-57Hardware Manual" TRINAMIC Motion Control GmbH & Co. KG 2007, XP002602381 Gefunden im Internet: URL:http://www.trinamic.com/tmc/media/Down loads/PANdrives/PD-170-57/PD-170-57_manual .pdf [gefunden am 2010-09-24]

## Beschreibung

Die Erfindung betrifft einen Linearantrieb für elektrisch verstellbare Möbel sowie einen Tisch mit einem solchen Linearantrieb sowie einen Motor für den Linearantrieb.

Es werden zunehmend elektrisch verstellbare Möbel angeboten. So ist bei vielen Tischen, insbesondere Schreibtischen, die Höhe der Tischplatte über einen speziellen Antrieb elektrisch verstellbar. Auch Betten, beispielsweise Komfortbetten oder Krankenhausbetten, lassen sich über elektrische Antriebe etwa in Höhe oder Neigungswinkel des Bettes einstellen.

In den elektrisch verstellbaren Möbeln werden für notwendige lineare Bewegungen Linearantriebe eingesetzt, welche üblicherweise einen Wechselstrommotor oder einen bürstenbehafteten Gleichstrommotor umfassen, dessen Rotationsbewegung mit Hilfe mechanischer Umsetzmittel in die lineare Bewegung umgesetzt wird.

Derartige bürstenbehaftete Gleichstrommotoren weisen eine große Bauhöhe auf, um das Bereitstellen ausreichender mechanischer Energie für die lineare Bewegung bereitstellen zu können. Die große Bauhöhe erschwert jedoch den Aufbau von Linearantrieben in kompakter Bauweise.

Andererseits kann bei einem Wechselstrommotor eine exakte Ansteuerung, welche für Linearantriebe im Möbelbereich notwendig ist, nur mit großem Aufwand erreicht werden. Zudem steht eine notwendige Wechselspannung im Möbelbereich üblicherweise nicht zur Verfügung oder kann unter sicherheitstechnischen Aspekten nur mit erhöhtem Aufwand bereitgestellt werden.

Das Dokument WO 01/71218 A1 zeigt einen Doppelschneckenstirnradantrieb zur elektromotorischen Verstellung eines Krankenhausbetts.

In dem Datenblatt "PANdrive PD-170-57 and TMCM-170-57" der Trinamic Motion Control GmbH & Co. KG ist ein bürstenloser Gleichstrommotor beschrieben.

Es ist daher Aufgabe der Erfindung, einen höhenverstellbaren Tischmöbel mit Linearantrieb anzugeben, der in kompakter Bauweise hergestellt und mit Gleichstrom betrieben werden kann.

Diese Aufgaben werden mit dem Gegenstand der unabhängigen Patentansprüche gelöst. Ausgestaltungsformen und Weiterbildungen der Erfindung sind Gegenstand der abhängigen Ansprüche.

Ein Ausführungsbeispiel eines Linearantriebs für einen elektrisch verstellbaren Tisch umfasst einen bürstenlosen Gleichstrommotor (Englisch: brushless dc-motor, BLDC-Motor) der eingerichtet ist, eine lineare Bewegung des Linearantriebs zu bewirken, und eine Steuerungseinrichtung zur Steuerung des Motors.

Bürstenlose Gleichstrommotoren ist eine üblicherweise für permanenterregte Synchronmotoren mit einer Schaltelektronik verwendete Bezeichnung; diese BLDC-Motoren haben eine höhere Energiedichte als bürstenbehaftete Gleichstrommotoren. Dadurch kann ein bürstenloser Gleichstrommotor mit geringerer Bauhöhe hergestellt werden als ein bürstenbehafteter Gleichstrommotor vergleichbarer Leistung. Ein Linearantrieb mit dem bürstenlosen Gleichstrommotor kann daher kompakt ausgeführt werden Darüber hinaus ermöglicht der bürstenlose Gleichstrommotor einen Direktantrieb ohne Getriebe.

Ein bürstenloser Gleichstrommotor unterscheidet sich vom bürstenbehafteten Gleichstrommotor dadurch, dass eine elektrische Kommutierung, beispielsweise im Stator des Motors nicht mechanisch über Bürsten, sondern elektronisch gesteuert erfolgt. Hierbei wird eine eingangsseitig an der Steuerung anliegende Gleichspannung von der Steuerungseinrichtung auf die entsprechenden Statorwicklungen derart durchgeschaltet, dass das jeweils erzeugte Magnetfeld zu einer Drehung des Rotors beziehungsweise des Rotors des Motors führt. Aus diesem Grund können bürstenlose Gleichstrommotoren auch als elektrisch kommutierte Motoren bezeichnet werden. Die Steuerungseinrichtung umfasst typischerweise einen geregelten Frequenz-umrichter.

Die Steuerungseinrichtung ist vorzugsweise in den Linearantrieb integriert, beispielsweise in ein Gehäuse des Linearantriebs. In einer Ausführungsform bildet die Steuerungseinrichtung hierbei mit dem bürstenlosen Gleichstrommotor eine integrierte Einheit. Anders ausgedrückt ist die Steuerungseinrichtung direkt am Motor angeordnet. Dadurch kann auf Verbindungsleitungen zwischen der Steuerungseinrichtung und dem Motor verzichtet werden. Dies ist insbesondere vorteilhaft, wenn mehrere verschiedene Statorwicklungen mit elektrischem Strom beziehungsweise elektrischer Spannung versorgt werden sollen. Ferner fallen in diesem Fall weniger Leitungsverluste an, wodurch die Effizienz des Motors erhöht wird.

In einem Ausführungsbeispiel umfasst der Linearantrieb auch Mittel zum Bestimmen einer Winkelposition des bürstenlosen Gleichstrommotors, welche von der Steuerungseinrichtung zur Ansteuerung des Motors verwendet werden kann. Angenommen ist, dass der bürstenlose Gleichstrommotor dreiphasig ausgeführt ist, während die Steuerungseinrichtung drei gesteuerte Halbbrücken umfasst, welche zur Versorgung des bürstenlosen Gleichstrommotors dienen.

Die Mittel zum Bestimmen der Winkelposition können beispielsweise zwei, drei oder mehr Hallsensoren umfassen, die am Motor, insbesondere am Rotor angeordnet sind und einen magnetischen Feldverlauf bei einer Drehung des Rotors detektieren. Beispielsweise sind drei Hallsensoren vorgesehen, die kreisförmig mit einem Winkelabstand von 120 Grad angeordnet sind.

In einem anderen Ausführungsbeispiel sind die Mittel zur Bestimmung der Winkelposition eingerichtet, Ströme in den Statorwicklungen auszuwerten und eine Winkelposition daraus zu bestimmen. Hierbei resultieren diese Ströme aus einer Gegenspannung im Rotor, welche auch als gegenelektromagnetische Kraft, Gegen-EMK bezeichnet wird. Anders ausgedrückt sind die Mittel zum Bestimmen der Winkelposition eingerichtet, diese in Abhängigkeit der Gegen-EMK zu bestimmen.

Als weitere Alternative können die Mittel zum Bestimmen der Winkelposition auch bei einer Sternverschaltung der Statorwicklungen die Winkelposition durch Mittelanzapfung des Sternpunkts bestimmen.

Mit den drei gesteuerten Halbbrücken kann eine jeweilige Gleichspannung auf drei Erregerwicklungen im Stator des Motors durchgeschaltet werden. Der bürstenlose Gleichstrommotor kann jedoch auch eine größere Anzahl an Erregerwicklungen aufweisen, wobei es auch in diesem Fall ausreichend sein kann, dass die drei Ausgangsspannungen der Halbbrücken, sogenannte Phasenspannungen, auf die verschiedenen Wicklungen verteilt werden. Beispielsweise werden zwei unabhängige Wicklungen durch eine gemeinsame Spannung beziehungsweise eine gemeinsame Halbbrücke versorgt.

In einem Ausführungsbeispiel kann die Steuerungseinrichtung einen ersten Betriebszustand einnehmen, in dem der Gleichstrommotor von einer Drehzahl unterhalb einer Solldrehzahl auf die Solldrehzahl beschleunigt wird. Hierbei ist die Steuerungseinrichtung dazu eingerichtet, in dem ersten Betriebszustand eine stetig alternierende dreiphasige Spannung mit ansteigender Frequenz an die Statorwicklungen beziehungsweise Erregerwicklungen des Gleichstrommotors abzugeben. Anders ausgedrückt weist die dreiphasige Spannung einen kontinuierlich ansteigenden bzw. abfallenden effektiven Spannungsverlauf auf. Ein derartiger Spannungsverlauf unterscheidet sich beispielsweise von einer Rechteckspannung mit einer Periodendauer, die sich aus der jeweiligen Umlaufdauer des Rotors ergibt.

Der entsprechende stetig alternierende Spannungsverlauf in den drei Spannungsphasen wird beispielsweise über eine Pulsweitenmodulation einer Eingangs-Gleichspannung erzeugt. Die Phasenspannungen weisen hierbei vorzugsweise einen Phasenwinkel von jeweils 120 Grad zueinander auf.

Die Frequenz der Spannungen wird in diesem Ausführungsbeispiel von einer geringen Anfangsfrequenz stetig zu einer Sollfrequenz erhöht, ohne etwaige Rückwirkungen aus den Erregerwicklungen oder die Winkelposition zu berücksichtigen. Anders ausgedrückt erfolgt die Frequenzerhöhung ausschließlich gesteuert und nicht geregelt.

Durch die langsam ansteigende Frequenz der Phasenspannungen wird erreicht, dass der Motor anfangs nur gering beschleunigt wird. Dadurch kann ein ruckartiges Anfahren des Motors verhindert werden. Dies führt auch zu einem verbesserten Geräuschverhalten des Antriebs. Anders ausgedrückt führt der Einsatz eines derart gesteuerten Motors zu einer Geräuschoptimierung des Linearantriebs.

In einer Ausführungsform ist die Steuerungseinrichtung eingerichtet, in dem ersten Betriebszustand eine jeweilige Amplitude der dreiphasigen Spannung in Abhängigkeit eines gemessenen Motorstroms einzustellen. Üblicherweise ist der Motorstrom proportional zum Moment beziehungsweise der Kraft im Motor. Bei entsprechender Auswertung des Motorstroms kann eine Anpassung der Spannungsamplitude der Phasenspannungen zum Einstellen einer gewünschten Kraft beziehungsweise eines gewünschten Moments erfolgen. Anders ausgedrückt, wird der Amplitudenwert der Phasenspannungen durch die Steuerungseinrichtung in Abhängigkeit des Motorstroms geregelt. Der Motorstrom kann für jede Phase separat durch entsprechende Sensoren bestimmt werden.

Alternativ oder zusätzlich ist die Steuerungseinrichtung eingerichtet, in dem ersten Betriebszustand eine jeweilige Amplitude der dreiphasigen Spannung in Abhängigkeit der Winkelposition des Gleichstrommotors einzustellen. Beispielsweise wird die Spannungsamplitude der Phasenspannungen entsprechend einem vorher bekannten oder berechneten Verlauf in Abhängigkeit der Winkelposition eingestellt. Eine derartige Berechnung des Verlaufs kann auch im Betrieb des Motors erfolgen.

In einer weiteren Ausführungsform kann die Steuerungseinrichtung einen zweiten Betriebszustand einnehmen, in dem der Gleichstrommotor auf eine Betriebsdrehzahl geregelt wird, die größer oder gleich der Solldrehzahl ist. Hierbei ist die Steuerungseinrichtung eingerichtet, in dem zweiten Betriebszustand eine Regelung der dreiphasigen Spannung als feldorientierte Regelung, insbesondere als feldorientierte Drehzahlregelung durchzuführen.

Beispielsweise wird die Regelung so durchgeführt, dass die jeweils an die Erregerwicklungen abgegebenen Spannungen so eingestellt werden, dass ein resultierender Wirkanteil im Motorstrom maximal und ein resultierender Blindanteil im Motorstrom minimal gehalten werden. Eine derartige Regelung kann beispielsweise auf Clarke'scher und Park'scher Transformation beruhen, welche eine Umrechnung zwischen einem dreiphasigen System in ein gleichwertiges Ersatz-Zweistrangsystem ermöglichen. Vorzugsweise wird der Blindanteil des resultierenden Motorstroms nicht auf Null geregelt, um ein verbessertes Verhalten der Regelung gegenüber Störungen zu ermöglichen. Dennoch wird in diesem Ausführungsbeispiel die Blindleistung im Motor auf einem geringen Wert gehalten.

Beispielsweise wird in dem zweiten Betriebszustand eine Regelung der dreiphasigen Spannung in Abhängigkeit der Winkelposition des Gleichstrommotors durchgeführt. Insbesondere kann die Winkelposition in den oben genannten Transformationen ausgewertet werden. Beim Einsatz von drei Hallsensoren für die Winkelbestimmung, wie oben beschrieben, kann beispielsweise ein kontinuierlicher Winkelverlauf aus jeweiligen Nulldurchgängen in der gemessenen magnetischen Feldintensität und der Drehzahl interpoliert werden.

In einer weiteren Ausführungsform kann die Steuerungseinrichtung einen dritten Betriebszustand einnehmen, in dem der Gleichstrommotor in den Stillstand gesteuert wird. Hierbei ist die Steuerungseinrichtung dazu eingerichtet, in dem dritten Betriebszustand die stetig alternierende dreiphasige Spannung mit abfallender Frequenz an die Statorwicklungen des Gleichstrommotors abzugeben. Anders ausgedrückt wird im dritten Betriebszustand eine Steuerung eingesetzt, die im Wesentlichen umgekehrt wie die Steuerung im ersten Betriebszustand abläuft. Insbesondere wird eine Frequenz der Phasenspannungen gesteuert herunter gefahren, während eine Amplitude der Phasenspannungen in Abhängigkeit des Motorstroms und/oder der Winkelposition geregelt wird.

In einer Ausführungsform wird der bürstenlose Gleichstrommotor beim Niederfahren bis in den Stillstand nicht bis zur Geschwindigkeit von Null sinusförmig mit Strom beziehungsweise Spannung versorgt. Der Strom wird in dieser Ausführungsform kurz vor dem Erreichen des Stillstandes zunächst konstant gehalten, wodurch sich ein konstantes Moment ergibt, und eine definierte Zeit später auf Null geregelt.

Die Drehbewegung des Motors kann im Linearantrieb auf verschiedene Weise mit mechanischen Umsetzmitteln in die lineare Bewegung umgesetzt werden. Beispielsweise können hierfür Systeme mit Zahnrädern, Zahnstangen, Ketten oder Seile eingesetzt werden. Vorzugsweise ist der Gleichstrommotor zum Antrieb einer Spindel vorgesehen, welche geeignet ist, eine Drehung des Motors in die lineare Bewegung des Linearantriebs umzusetzen.

In verschiedenen Ausführungsformen ist der Gleichstrommotor zum Antrieb der Spindel mittels eines Getriebes, insbesondere eines Planetengetriebes vorgesehen. Somit kann üblicherweise eine schnellere Drehbewegung des Motors in eine langsamere Drehbewegung der Spindel umgesetzt werden, welche jedoch wegen der Untersetzung ein höheres Drehmoment aufweist. Somit können auch Motoren eingesetzt werden, welche an der Motorwelle ein geringeres Drehmoment liefern als dasjenige, welches an der Spindel benötigt wird.

Alternativ kann jedoch auch ein bürstenloser Gleichstrommotor mit höherem Drehmoment eingesetzt werden. In diesem Fall ist der Gleichstrommotor zum direkten Antrieb der Spindel, d. h. ohne Getriebe, vorgesehen. Dadurch lässt sich der Linearantrieb noch kompakter ausführen.

In einem Ausführungsbeispiel umfasst der Linearantrieb ferner ein Haltemittel, das geeignet ist, die lineare Bewegung des Linearantriebs in einem Ruhezustand zu verhindern. Somit wird beispielsweise vermieden, dass der Linearantrieb durch das Gewicht einer anzuhebenden Tischplatte im Stillstand des Motors eingedrückt wird. Das Haltemittel ist beispielsweise dadurch realisiert, dass der bürstenlose Gleichstrommotor im Stillstand mit einem Bremsstrom versorgt wird, der eine Drehbewegung des Motors, welche von außen bewirkt wird, verhindert. Alternativ können auch mechanische oder elektromechanische Haltemittel vorgesehen werden wie z. B. eine mechanische Bremse oder ein elektronisch bedienbares Einrastkonzept. Hierbei wird beispielsweise ein elektromagnetisch bewegbarer Stift in ein Zahnrad, eine Zahnstange oder eine ähnliche Rastvorrichtung einbeziehungsweise ausgerastet.

Der bürstenlose Gleichstrommotor des Linearantriebs kann einen Innenrotor aufweisen, bei dem die elektrisch kommutierten Erregerwicklungen in einem außen liegenden Stator eingesetzt sind. Vorzugsweise weist der Motor jedoch einen Außenrotor auf, welcher üblicherweise gegenüber einem Innenrotor einen Motor mit größerem Drehmoment bewirken kann.

Für den Motor können Anordnungen mit beliebigen Polpaarzahlen verwendet werden. Vorzugsweise weist der bürstenlose Gleichstrommotor jedoch eine ungerade Polpaarzahl auf, da sich herausgestellt hat, dass bürstenlose Gleichstrommotoren mit ungerader Polpaarzahl weniger Laufgeräusche entwickeln und daher unauffälliger im Betrieb in einem Linearantrieb für verstellbare Möbel sind.

Im übrigen ist es vorteilhaft, Polpaarzahlen größer oder gleich drei zu verwenden, da erfahrungsgemäß mit höheren Polpaarzahlen höhere Drehmomente erzeugt werden können, auch wenn der Motor mit einer niedrigen Drehzahl betrieben wird. Dies kann insbesondere beim getriebelosen Antrieb gewünscht sein.

Besonders vorteilhaft ist ein bürstenloser Gleichstrommotor mit der Polpaarzahl von mindestens fünf. Dadurch reduziert sich die Drehzahl bei 50 Hz Netzfrequenz auf maximal 600 Umdrehungen pro Minute, was dem Einfügen einer Übersetzung bei einem Getriebe entspricht. Gleichzeitig erhöht sich durch diese Maßnahme das von dem bürstenlosen Gleichstrommotor abgegebene Drehmoment. Ein weiterer Vorteil von mindestens fünf Polpaaren ist die geringe Geräuschentwicklung, was in Verbindung mit einem Linearantrieb zu geringeren Laufgeräuschen führt.

In einer Ausführungsform weist ein bürstenloser Gleichstrommotor mit mindestens fünf Polpaaren einen größeren Durchmesser auf als für eine vorgegebene Leistung eigentlich notwendig ist. Dadurch ergibt sich der Vorteil, dass eine niedrige Drehzahl bei einem gleichzeitig hohen Drehmoment erreicht wird. Dadurch ist es möglich, einen Direktantrieb ohne mindestens einstufiges Getriebe vorzusehen. Dieser weist gegenüber einem für die vorgegebene Leistung erforderlichen bürstenlosen Gleichstrommotor mit einstufigem, durch das erforderliche Drehmoment notwendigem, Getriebe einen höheren Wirkungsgrad auf.

Ein Ausführungsbeispiel eines höhenverstellbaren Tisches umfasst wenigstens einen Linearantrieb gemäß einem der zuvor beschriebenen Ausführungsbeispiele. Vorzugsweise umfasst ein derartiger höhenverstellbarer Tisch jedoch wenigstens zwei Linearantriebe der beschriebenen Art, wobei die Steuerungseinrichtungen der wenigstens zwei Linearantriebe an ein BUS-System angeschlossen sind, mit dem Steuersignale für die Linearantriebe übertragbar sind. An das BUS-System kann beispielsweise auch ein Bediengerät angeschlossen werden, welches die nötigen Steuersignale für Auf- und Abwärtsbewegung des Tisches erzeugt und über das BUS-System an die Steuerungseinrichtungen überträgt.

In einer Ausführungsform kann an das BUS-System auch eine Energieversorgung für die wenigstens zwei Linearantriebe angeschlossen werden. Somit kann die Gleichspannung, welche zur Erzeugung der jeweiligen Phasenspannungen verwendet wird, direkt aus dem BUS-System bezogen werden. Dementsprechend ist es nicht notwendig, eine separate Strom- beziehungsweise Spannungsversorgung für die Linearantriebe bereitzustellen.

Die Erfindung wird nachfolgend an Ausführungsbeispielen anhand der Figuren näher erläutert. Funktionsbeziehungsweise wirkungsgleiche Elemente tragen dabei gleiche Bezugszeichen.

Es zeigen:
- Figur 1: ein erstes Ausführungsbeispiel eines Linearantriebs,
- Figur 2: ein zweites Ausführungsbeispiel eines Linearantriebs,
- Figur 3: ein Ausführungsbeispiel eines bürstenlosen Gleichstrommotors,
- Figur 4: eine Spannungserzeugungseinrichtung mit drei Halbbrücken,
- Figur 5: ein zeitliches Diagramm für eine Drehzahlsteuerung eines bürstenlosen Gleichstrommotors,
- Figur 6A: einen beispielhaften Spannungsverlauf einer Phasenspannung,
- Figur 6B: einen beispielhaften Verlauf von resultierenden Phasenströmen,
- Figur 7: ein Ausführungsbeispiel eines elektrisch verstellbaren Tisches und
- Figur 8: ein drittes Ausführungsbeispiel eines linearen Direktantriebs mit bürstenlosem Gleichstrommotor.

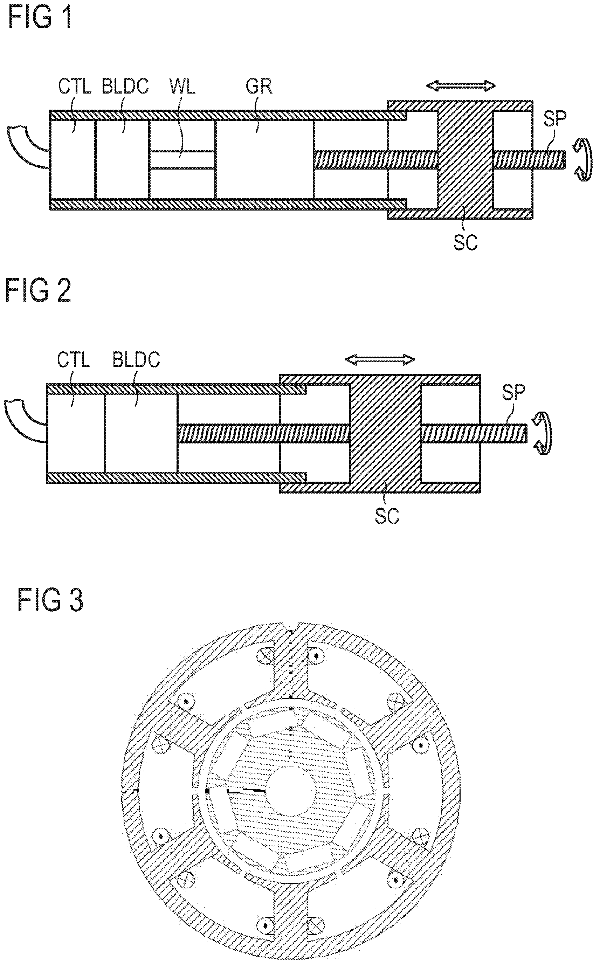

Figur 1 zeigt ein schematisches Ausführungsbeispiels eines Linearantriebs mit einem bürstenlosen Gleichstrommotor BLDC. Der Linearantrieb ist im Querschnitt dargestellt und umfasst eine Steuerungseinrichtung CTL, die unmittelbar am Motor BLDC angeordnet ist und mit diesem zusammen eine integrierte Einheit bildet. An der Steuerungseinrichtung CTL sind Anschlussleitungen zur Versorgung der Steuerungseinrichtung mit Spannung und/oder Steuersignalen eingerichtet. Der Motor BLDC ist mechanisch über eine Welle WL mit einem Getriebe GR verbunden, welches eine Spindel SP antreibt. Das Getriebe GR ist beispielsweise als Planetengetriebe ausgeführt. Auf der Spindel SP ist über eine hier nicht dargestellte Spindelmutter ein Schlitten SC aufgesetzt, welcher sich bei entsprechender Rotation der Spindel SP nach rechts beziehungsweise links, d. h. entlang der Drehachse der Spindel SP bewegen kann.

Die Steuerungseinrichtung CTL kann alternativ auch separat vom Motor BLDC innerhalb des Linearantriebs angeordnet sein.

Der bürstenlose Gleichstrommotor BLDC weist eine geringe Bauhöhe auf. Dennoch kann mit der dargestellten Anordnung ein großer Hub des Linearantriebs erreicht werden. Somit lässt sich mit der dargestellten Anordnung ein gutes Verhältnis zwischen Hub und Bauhöhe des Antriebs erreichen.

Ein bürstenloser Gleichstrommotor weist im Vergleich zu einem herkömmlichen bürstenbehafteten Gleichstrommotor eine höhere Energiedichte auf, weshalb seine Abmessungen bei gleicher Leistungsfähigkeit geringer gewählt werden können. Dies wird auch dadurch unterstützt, dass bürstenlose Gleichstrommotoren einen besseren Wirkungsgrad als bürstenbehaftete Gleichstrommotoren erreichen können.

Figur 2 zeigt ein weiteres Ausführungsbeispiel eines Linearantriebs mit einem bürstenlosen Gleichstrommotor BLDC. Im Unterschied zum Ausführungsbeispiel von Figur 1 ist hier der Motor BLDC zum direkten Antrieb der Spindel SP vorgesehen, ohne dass ein Getriebe benötigt wird. Dadurch lässt sich der Linearantrieb noch kleiner beziehungsweise mit geringerer Bauhöhe ausführen. Der Motor selbst sollte jedoch so gewählt werden, dass er ein ausreichendes Drehmoment für den Antrieb der Spindel SP auch bei niedrigeren Motordrehzahlen aufweist.

Figur 3 zeigt ein Ausführungsbeispiel eines bürstenlosen Gleichstrommotors in schematischer Darstellung. Der Motor weist einen außen liegenden Stator mit sechs Erregerwicklungen auf, die entsprechend ihrem Wicklungssinn mit einem Kreuz- beziehungsweise Punktsymbol gekennzeichnet sind. Eine Ansteuerung beziehungsweise Verdrahtung der Erregerwicklungen ist aus Übersichtsgründen hier nicht dargestellt. Der Motor weist einen innen liegenden Rotor mit acht Polen, d. h. vier Polpaaren auf. Der innen liegende Rotor weist eine Ausnehmung zur Aufnahme einer Welle beziehungsweise Spindel auf.

Der Motor kann beispielsweise mit einer dreiphasigen Spannung von der Steuerungseinrichtung CTL angesteuert werden, wobei im vorliegenden Ausführungsbeispiel vorzugsweise gegenüber liegende Erregerwicklungen in Serie beziehungsweise parallel geschaltet werden.

Die Zahl der Erregerwicklungen und Polpaare in Figur 3 ist nur beispielhaft gewählt. Alternativ kann der bürstenlose Gleichstrommotor auch mit einer höheren Zahl an Erregerwicklungen betrieben werden, welche vorzugsweise ein Vielfaches von drei sind, um eine Ansteuerung mit drei phasenverschobenen Spannungen zu ermöglichen. Die Zahl der Polpaare sollte als ungerade gewählt werden, um einen geräuscharmen Betrieb des Motors zu ermöglichen. Vorzugsweise weist der Motor eine Polpaarzahl von fünf oder sieben auf. Bürstenlose Gleichstrommotoren mit Polpaarzahlen in dieser Größenordnung weisen ein verbessertes Drehmoment auch bei niedrigen Drehzahlen auf. Anstelle des hier dargestellten Motors mit Innenrotor kann auch ein bürstenloser Gleichstrommotor mit außen liegendem Rotor eingesetzt werden.

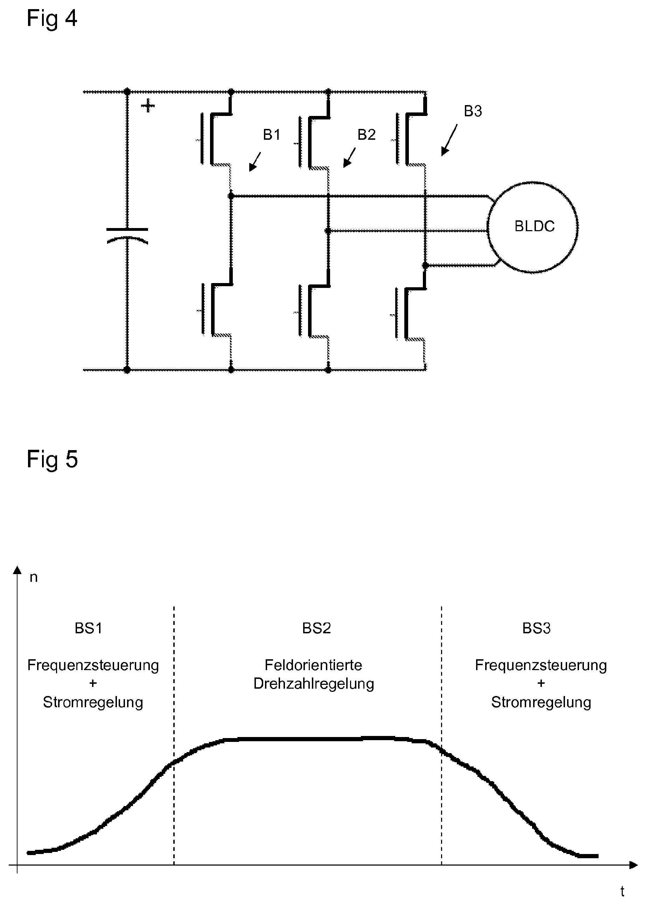

Figur 4 zeigt ein Blockschaltbild einer Spannungserzeugungseinrichtung als Teil der Steuerungseinrichtung CTL. Die Spannungserzeugungseinrichtung umfasst drei Halbbrücken B1, B2, B3 mit jeweils zwei Transistoren, die in diesem Ausführungsbeispiel als Feldeffekt-Transistoren dargestellt sind. Ein Mittelabgriff der jeweiligen Halbbrücken B1, B2, B3 ist mit entsprechenden Statorwicklungen des Motors BLDC gekoppelt. Über die Halbbrücken B1, B2, B3 kann eine Spannung der schematisch dargestellten Spannungsquelle auf die entsprechenden Anschlüsse durchgeschaltet werden.

Gewünschte Ausgangsspannungen der Halbbrücken B1, B2, B3 lassen sich durch entsprechende, nicht dargestellte Ansteuerung der Transistoren erzeugen, beispielsweise durch pulsweitenmodulierte Steuersignale, die an die Steueranschlüsse der Transistoren geführt werden.

Figur 5 zeigt ein beispielhaftes zeitliches Diagramm zur Drehzahlregelung des Motors BLDC durch die Steuerungseinrichtung CTL. Im Betrieb des Linearantriebs beziehungsweise des Motors kann zwischen wenigstens drei Betriebszuständen BS1, BS2, BS3 unterschieden werden, wobei in dem ersten Betriebszustand BS1 der Motor aus dem Stillstand beziehungsweise einer Drehzahl unterhalb einer Solldrehzahl auf die Solldrehzahl beschleunigt wird. In dem zweiten Betriebszustand BS2 wird der Gleichstrommotor auf eine Betriebsdrehzahl geregelt, die größer oder gleich der Solldrehzahl ist. Im dritten Betriebszustand wird der Motor aus der Bewegung, vorzugsweise aus der Betriebsdrehzahl, in den Stillstand gesteuert.

Wie man aus Figur 5 entnehmen kann, steigt die Drehzahl n des Motors im ersten Betriebszustand BS1 kontinuierlich vom Stillstand bis zur Solldrehzahl an, welche durch den Schnittpunkt mit der linken gestrichelten Linie gekennzeichnet ist. Hierbei ist die Drehzahlsteigerung am Anfang eher gering und nimmt mit der Zeit zu. Anders ausgedrückt wird im ersten Betriebszustand BS1 mit einer anfangs geringen und langsam steigenden Beschleunigung gearbeitet. Somit lässt sich ein ruckfreier Betrieb im Anfahren des Motors ermöglichen. Zudem führt eine derartige Ansteuerung des Motors zu einer verringerten Geräuschentwicklung im Vergleich zu einem Anfahren mit initial höherer Beschleunigung.

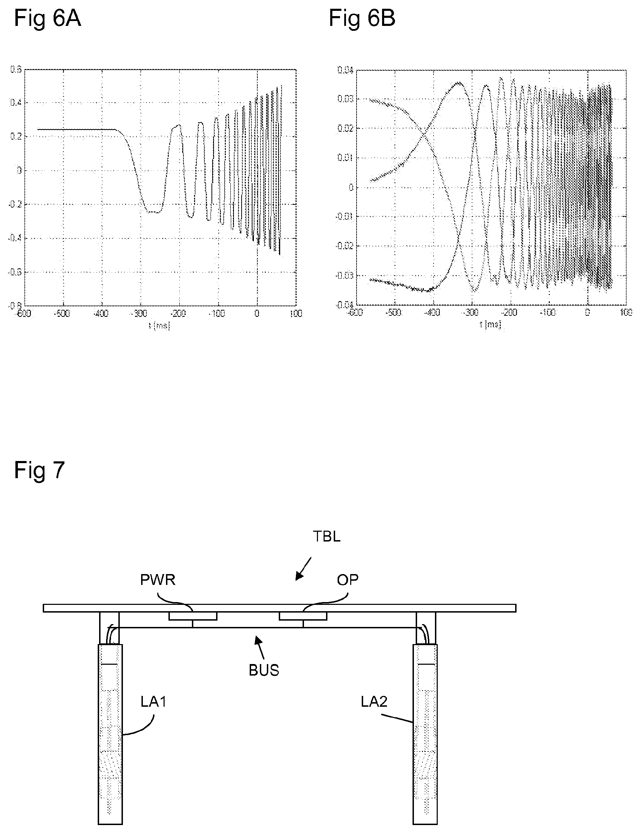

Mit Verweis auf Figur 6A wird dies dadurch erreicht, dass eine Phasenspannung mit stetig alternierenden Verlauf und ansteigender Frequenz an die Statorwicklungen des Motors BLDC abgegeben wird. Ein entsprechender zeitlicher Verlauf der Phasenspannung ist in Figur 6A exemplarisch für eine der drei Phasenspannungen dargestellt. Der Spannungsverlauf, der in Figur 6A dargestellt ist, beginnt mit einer gleich bleibenden Spannung, welche für eine definierte Ausrichtung des Motors sorgen kann. Im weiteren Verlauf steigt die Frequenz des sinusartig dargestellten Signals kontinuierlich an, entsprechend der ansteigenden Drehzahl des Motors. Zur Verbesserung des Signalverhaltens im Motor sind die Spitzen der sinusartigen Schwingung leicht abgeflacht.

In Figur 6A ist nur eine der Phasenspannungen dargestellt. Die zwei übrigen Phasenspannungen weisen den gleichen Signalverlauf auf und sind jeweils um 120 Grad phasenverschoben. Aus Übersichtsgründen sind die weiteren Phasenspannungen in Figur 6A nicht dargestellt.

In Figur 6B sind entsprechende resultierende Ströme in den drei Statorwicklungen dargestellt, welche aus den jeweiligen Phasenspannungen entsprechend Figur 6A resultieren. Insbesondere geht einer der drei Phasenströme auf die Phasenspannung entsprechend Figur 6A zurück. Wiederum lässt sich die ansteigende Frequenz in den Signalen erkennen.

Mit Verweis auf Figur 5 erfolgt im ersten Betriebszustand BS1 die Anpassung der Frequenz der Phasenspannungen gesteuert, also ohne Auswertung von möglichen Messgrößen am Motor. Die Amplitude der Phasenspannungen wird jedoch geregelt. Beispielsweise wird die Amplitude der Spannung so geregelt, dass sich eine vorher definierte Länge eines resultierenden Stromzeigers einstellt. Dies kann beispielsweise mit einer Regelung auf Basis des Motorstroms durchgeführt werden. Aus Figur 6B ist ersichtlich, das die Amplitude der Phasenströme im Wesentlichen konstant gehalten wird, während die Phasenspannung in Figur 6A, entsprechend der Regelung langsam in ihrer Amplitude ansteigt. Alternativ oder zusätzlich kann auch eine Winkelposition des Motors mit in die Regelung einbezogen werden.

Eine Bestimmung der Winkelposition des Motors kann beispielsweise über am Motor angebrachte Hallsensoren bestimmt werden. Alternativ können auch die Auswirkungen der Gegen-EMK im Motor auf den Motorstrom ausgewertet werden, um die Winkelposition zu bestimmen. Eine weitere Möglichkeit, die Winkelposition zu bestimmen, besteht darin, bei einer Sternverschaltung der Statorwicklungen Signale am Sternpunkt auszuwerten.

Beim Erreichen der Solldrehzahl wird vom ersten in den zweiten Betriebszustand BS2 umgeschaltet, in dem eine feldorientierte Drehzahlregelung durchgeführt wird. Hierbei wird die Winkelposition des Motors ausgewertet und der Phasenwinkel der auszugebenden Phasenspannungen so geregelt, dass der Motor nahezu wirkungsgradoptimal betrieben wird, indem die Blindleistung auf einen zuvor definierten Wert geregelt wird, der vergleichsweise klein gewählt ist.

Wenn der Motor wieder in den Stillstand gesteuert werden soll, wird die Steuerungseinrichtung in den dritten Betriebszustand BS3 geschaltet. Hierbei erfolgt in ähnlicher Weise wie im ersten Betriebszustand BS1 eine Frequenzsteuerung bei gleichzeitiger Stromregelung. Anders ausgedrückt wird eine Frequenz der auszugebenden Phasenspannungen gesteuert von der Ausgangsdrehzahl, beispielsweise der Betriebsdrehzahl zum Stillstand gesteuert. Auch in diesem Betriebszustand ist es vorteilhaft, die Beschleunigung beziehungsweise negative Beschleunigung so zu wählen, dass der Motor im Wesentlichen ruckfrei abgebremst wird. Aufgrund von unvermeidlicher Haftreibung und mechanischem Spiel des Linearantriebs, welcher sich aus Spindel und/oder Getriebe ergibt, ist es vorteilhaft, den Motor BLDC beim Niederfahren bis in den Stillstand nicht bis zu einer Geschwindigkeit von Null durchzusteuern. Dadurch kann eine mögliche Geräuschentwicklung im Motor verringert werden. Vor dem Erreichen des Stillstandes wird der Strom in den Statorwicklungen konstant gehalten und einen definierten Zeitraum später auf Null geregelt.

Die Ansteuerfunktionen sollte im ersten und dritten Betriebszustand BS1 bzw. BS3 vorteilhaft so gewählt sein, dass eine zweimalige mathematische Differentiation möglich ist. In diesem Fall kann ein ruckartiger Betrieb des Motors verhindert werden.

Figur 7 zeigt ein Ausführungsbeispiel eines höhenverstellbaren Tisches TBL mit einem ersten und einem zweiten Linearantrieb LA1, LA2, welche in entsprechenden Tischbeinen beziehungsweise dem Tischgestell angeordnet sind. Figur 7 zeigt ferner ein Bedienteil OP und eine Energieversorgung PWR, welche an ein BUS-System BUS angeschlossen sind. An das BUS-System sind ferner die Linearantriebe LA1, LA2 angeschlossen.

Über das Bedienteil OP kann ein Benutzer des Tisches Steuersignale erzeugen, welche eine Auf- oder Abwärtsbewegung des Tisches bewirken sollen. Diese werden über das BUS-System BUS an die Linearantriebe LA1, LA2 übertragen. Die Energieversorgung PWR dient zur Spannungsversorgung der Linearantriebe LA1, LA2, so dass keine separaten Netzteile für die Antriebe notwendig sind. Alternativ sind jedoch auch Ausführungsformen mit separaten Netzteilen möglich, so dass in diesem Fall über das BUS-System BUS lediglich die Steuersignale übertragen werden.

Wenn, wie im vorliegenden Beispiel, mehrere Antriebe für eine Bewegung notwendig sind, werden die Steuerungseinrichtungen der Linearantriebe koordiniert so angesteuert, dass es zu einem gleichmäßigen Anheben beziehungsweise Absenken des Tisches kommt.

In einem Ausführungsbeispiel kann das Bedienteil OP auch in einen der Linearantriebe integriert oder an ihm angeordnet sein, so dass kein separates Bedienteil erforderlich ist. In diesem Fall übernimmt beispielsweise der Linearantrieb mit Bedienteil eine Masterfunktion am BUS-System BUS, während der andere oder die anderen Linearantriebe von dem Master angesteuert werden.

Die zuvor beschriebenen Linearantriebe können auch in elektrisch verstellbaren Betten eingesetzt werden. Beispielsweise lassen sich Komfortbetten oder Krankenhausbetten über elektrische Antriebe etwa in Höhe oder Neigungswinkel des Bettes einstellen.

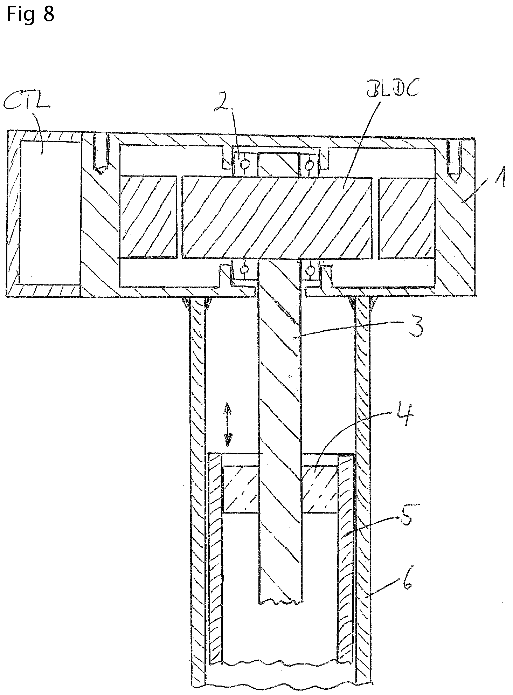

Figur 8 zeigt ein weiteres Ausführungsbeispiel eines linearen Direktantriebs mit einem bürstenlosen Gleichstrommotor BLDC. Der Motor BLDC ist zum direkten Antrieb der Spindel 3 vorgesehen, ohne dass ein Getriebe dazwischen angeordnet ist. Der BLDC ist in einem Motorgehäuse mittels einer Lagerung 2 drehbar gelagert. Die Spindel 3 wirkt auf die Spindelmutter 4 und das damit verbundene innere Führungsrohr 5 und versetzt dieses bei einer Drehung des Motors BLDC in eine lineare Bewegung in Pfeilrichtung. Nach außen ist der Antrieb durch das mit dem Motorgehäuse 1 fest verbundene äußere Führungsrohr 6 geführt und abgedeckt. Die Motorsteuerung CTL ist in einem, im Ausführungsbeispiel angeflanschten, Gehäuseteil angeordnet und mittels nicht dargestellter Verbindungsleitungen mit dem Motor BLDC verbunden.

Um den Motor BLDC in einem Drehzahlbereich zwischen 300 U/min bis 600 U/min betreiben zu können, sind mindestens fünf Polpaare vorgesehen, was auch zu einer geringen Geräuschentwicklung führt. Bei einer gewünschten linearen Fahrgeschwindigkeit zwischen 30 mm/s bis 60 mm/s und einer gewünschten Kraft von >600 N ist eine Leistung von etwa 36 W erforderlich. Der Motor BLDC lässt sich mit geringer Bauhöhe ausführen. Der Durchmesser des BLDC ist ausgelegt, um ein hohes Drehmoment bei der vorgesehenen geringen Drehzahl zu entwickeln.

Bei einer Auslegung auf 40 W Abgabeleistung hat ein solcher Direktantriebsmotor BLDC einen Leistungsbedarf von 77 W. Im Vergleich dazu hat ein bürstenloser Gleichstrommotor geringeren Durchmessers, der aber ein Getriebe für das geforderte Drehmoment benötigt, einen Leistungsbedarf von 95 W während ein Standard-Gleichstrommotor mit zweistufigem Getriebe 163 W benötigt. Der vorgeschlagene bürstenlose Gleichstrommotor BLDC für den Einsatz in einem Direktantrieb hat also den eindeutig höchsten Wirkungsgrad und erspart ein Getriebe.

Die einstufige Spindel gemäß Figur 8 kann auch als zweistufige Spindel ausgeführt sein. Ebenso kann der Motor BLDC statt am Führungsrohr mit dem größten Durchmesser an dem Führungsrohr mit dem kleinsten Durchmesser angeschlossen sein, was eine lediglich andere konstruktive Ausführung erfordert.

## Patentansprüche

1. Höhenverstellbarer Tischmöbel mit Linearantrieb umfassend einen bürstenlosen Gleichstrommotor (BLDC), der eingerichtet ist, eine lineare Bewegung des Linearantriebs zu bewirken, und eine Steuerungseinrichtung (CTL) zur Steuerung des Motors.

2. Tischmöbel nach Anspruch 1, bei dem die Steuerungseinrichtung (CTL) mit dem bürstenlosen Gleichstrommotor (BLDC) eine integrierte Einheit bildet.

3. Tischmöbel nach Anspruch 1 oder 2, ferner umfassend Mittel zum Bestimmen einer Winkelposition des Gleichstrommotors (BLDC).

4. Tischmöbel nach einem der Ansprüche 1 bis 3, bei dem der bürstenlose Gleichstrommotor (BLDC) dreiphasig ausgeführt ist und die Steuerungseinrichtung (CTL) drei gesteuerte Halbbrücken (B1, B2, B3) umfasst, welche zur Versorgung des bürstenlosen Gleichstrommotors (BLDC) dienen.

5. Tischmöbel nach Anspruch 4, bei dem die Steuerungseinrichtung (CTL) einen ersten Betriebszustand (BS1) einnehmen kann, in dem der Gleichstrommotor (BLDC) von einer Drehzahl unterhalb einer Solldrehzahl auf die Solldrehzahl beschleunigt wird, wobei die Steuerungseinrichtung (CTL) eingerichtet ist, in dem ersten Betriebszustand (BS1) eine stetig alternierende dreiphasige Spannung mit ansteigender Frequenz an Statorwicklungen des Gleichstrommotors (BLDC) abzugeben.

6. Tischmöbel nach Anspruch 5, bei dem die Steuerungseinrichtung (CTL) eingerichtet ist, in dem ersten Betriebszustand (BS1) eine jeweilige Amplitude der dreiphasigen Spannung in Abhängigkeit eines gemessenen Motorstroms und/oder in Abhängigkeit der Winkelposition des Gleichstrommotors (BLDC) einzustellen.

7. Tischmöbel nach Anspruch 5 oder 6, bei dem die Steuerungseinrichtung (CTL) einen zweiten Betriebszustand (BS2) einnehmen kann, in dem der Gleichstrommotor (BLDC) auf eine Betriebsdrehzahl geregelt wird, die größer oder gleich der Solldrehzahl ist, wobei die Steuerungseinrichtung (CTL) eingerichtet ist, in dem zweiten Betriebszustand (BS2) eine Regelung der dreiphasigen Spannung als feldorientierte Regelung durchzuführen.

8. Tischmöbel nach Anspruch 7, bei dem die Steuerungseinrichtung (CTL) einen dritten Betriebszustand (BS3) einnehmen kann, in dem der Gleichstrommotor (BLDC) in den Stillstand gesteuert wird, wobei die Steuerungseinrichtung (CTL) eingerichtet ist, in dem dritten Betriebszustand (BS3) die stetig alternierende dreiphasige Spannung mit abfallender Frequenz an die Statorwicklungen des Gleichstrommotors (BLDC) abzugeben.

9. Tischmöbel nach einem der Ansprüche 1 bis 8, bei dem der Gleichstrommotor (BLDC) zum Antrieb einer Spindel (SP) vorgesehen ist, welche geeignet ist, eine Drehung in die lineare Bewegung umzusetzen.

10. Tischmöbel nach Anspruch 9, bei dem der Gleichstrommotor (BLDC) zum Antrieb der Spindel (SP) mittels eines Getriebes (GR), insbesondere eines Planetengetriebes, oder zum direkten Antrieb der Spindel (SP), insbesondere ohne Getriebe, vorgesehen ist.

11. Tischmöbel nach einem der Ansprüche 1 bis 10, ferner umfassend ein Haltemittel, das geeignet ist, die lineare Bewegung des Linearantriebs in einem Ruhezustand zu verhindern.

12. Tischmöbel nach einem der Ansprüche 1 bis 11, bei dem der Gleichstrommotor (BLDC) einen Außenrotor aufweist.

13. Höhenverstellbarer Tisch (TBL) mit wenigstens zwei Linearantrieben gemäß einem der Ansprüche 1 bis 12, wobei die Steuerungseinrichtungen der wenigstens zwei Linearantriebe (LA1, LA2) an ein Bussystem (BUS) angeschlossen sind, mit dem Steuersignale für die Linearantriebe (LA1, LA2) übertragbar sind.

14. Tisch (TBL) nach Anspruch 13, bei dem an das Bussystem (BUS) eine Energieversorgung (PWR) für die wenigstens zwei Linearantriebe (LA1, LA2) anschließbar ist.

15. Höhenverstellbarer Tischmöbel gemäß einem der Ansprüche 1 bis 12, umfassend ein bürstenlosen Gleichstrommotor (BLDC), der eingerichtet ist, eine lineare Bewegung eines Direktantriebs eines höhenverstellbaren Tisches, insbesondere eines getriebelosen Antriebs, zu bewirken, mit mindestens fünf Polpaaren und mit einer Steuerungseinrichtung (CTL) zur Steuerung des bürstenlosen Gleichstrommotors.

## Claims

1. Height-adjustable piece of table furniture with a linear actuator, comprising a brushless DC motor (BLDC) arranged to effect a linear movement of the linear actuator, and a control device (CTL) for controlling the motor.

2. Table furniture according to claim 1, in which the control device (CTL) forms an integrated unit with the brushless DC motor (BLDC).

3. Table furniture according to claim 1 or 2, further comprising means for determining an angular position of the DC motor (BLDC).

4. Table furniture according to any of the claims 1 to 3, in which the brushless DC motor (BLDC) is realized so as to be three-phased and the control device (CTL) comprises three controlled half-bridges (B1, B2, B3) serving for supplying the brushless DC motor (BLDC).

5. Table furniture according to claim 4, in which the control device (CTL) may adopt a first mode of operation (BS1) in which the DC motor (BLDC) is accelerated from a rotational speed below a target rotational speed to the target rotational speed, the control device (CTL) being arranged to deliver a continuously alternating three-phased voltage with increasing frequency to stator windings of the DC motor (BLDC) in the first mode of operation (BS1).

6. Table furniture according to claim 5, in which the control device (CTL) is arranged to adjust a respective amplitude of the three-phased voltage depending on a measured motor current and/or depending on the angular position of the DC motor (BLDC) in the first mode of operation (BS1).

7. Table furniture according to claim 5 or 6, in which the control device (CTL) can adopt a second mode of operation (BS2) in which the DC motor (BLDC) is regulated to have an operating speed which is larger than or equal to the target rotational speed, the control device (CTL) being arranged to carry out a regulation of the three-phased voltage as a field-oriented regulation in the second mode of operation (BS2).

8. Table furniture according to claim 7, in which the control device (CTL) can adopt a third mode of operation (BS3) in which the DC motor (BLDC) is controlled so as to go to standstill, the control device (CTL) being arranged to deliver the continuously alternating three-phased voltage with decreasing frequency to the stator windings of the DC motor (BLDC) in the third mode of operation (BS3).

9. Table furniture according to any of the claims 1 to 8, in which the DC motor (BLDC) is provided for actuating a spindle (SP) which is suitable for converting rotation into the linear movement.

10. Table furniture according to claim 9, in which the DC motor (BLDC) is provided for actuating the spindle (SP) by means of a gear unit (GR), in particular a planetary gear unit, or for directly actuating the spindle (SP) in particular without any gear unit.

11. Table furniture according to any of the claims 1 to 10, further comprising a retaining means suitable for preventing the linear movement of the linear actuator in a state of rest.

12. Table furniture according to any of the claims 1 to 11, in which the DC motor (BLDC) comprises an external rotor.

13. Height-adjustable table (TBL) comprising at least two linear actuators according to any of the claims 1 to 12, wherein the control devices of the at least two linear actuators (LA1, LA2) are connected to a bus system (BUS) which is able to transmit control signals for the linear actuators (LA1, LA2).

14. Table (TBL) according to claim 13, in which a power supply (PWR) for the at least two linear actuators (LA1, LA2) may be connected to the bus system (BUS).

15. Height-adjustable table furniture according to one of claims 1 to 12, comprising a brushless DC motor (BLDC) arranged to effect a linear movement of a direct drive system of a height-adjustable table, in particular of a gearless drive unit, comprising at least five pole pairs and a control device (CTL) for controlling the brushless DC motor.

## Revendications

1. Table réglable en hauteur comportant un entraînement linéaire comprenant un moteur à courant continu sans balai (BLDC) qui est conçu pour produire un mouvement linéaire de l'entraînement linéaire et un dispositif de commande (CTL) destiné à commander le moteur.

2. Table selon la revendication 1, dans laquelle le dispositif de commande (CTL) forme avec le moteur à courant continu sans balai (BLDC) une unité intégrée.

3. Table selon la revendication 1 ou 2, comprenant en outre des moyens destinés à déterminer une position angulaire du moteur à courant continu (BLDC).

4. Table selon l'une quelconque des revendications 1 à 3, dans laquelle le moteur à courant continu sans balai (BLDC) est réalisé sous forme triphasée et le dispositif de commande (CTL) comprend trois demi-ponts commandés (B1, B2, B3) qui sont utilisés pour alimenter le moteur à courant continu sans balai (BLDC).

5. Table selon la revendication 4, dans laquelle le dispositif de commande (CTL) peut passer dans un premier état de fonctionnement (BS1) dans lequel le moteur à courant continu (BLDC) est accéléré d'une vitesse de rotation inférieure à une vitesse de rotation nominale à la vitesse de rotation nominale, dans laquelle le dispositif de commande (CTL) est conçu pour délivrer, dans le premier état de fonctionnement (BS1), une tension triphasée continument alternative avec une fréquence croissante, aux enroulements de stator du moteur à courant continu enregistrer le document (BLDC).

6. Table selon la revendication 5, dans laquelle le dispositif de commande (CTL) est conçu, dans le premier état de fonctionnement (BS1), pour régler une amplitude respective de la tension triphasée en fonction d'un courant de moteur mesuré et/ou en fonction de la position angulaire du moteur à courant continu (BLDC).

7. Table selon la revendication 5 ou 6, dans laquelle le dispositif de commande (CTL) peut passer dans un deuxième état de fonctionnement (BS2) dans lequel le moteur à courant continu (BLDC) est réglé à une vitesse de rotation de fonctionnement qui est supérieure ou égale à la vitesse de rotation nominale, dans laquelle le dispositif de commande (CTL) est conçu pour effectuer, dans le deuxième état de fonctionnement (BS2), une régulation de la tension triphasée sous la forme d'une régulation orientée en fonction du champ.

8. Table selon la revendication 7, dans laquelle le dispositif de commande (CTL) peut passer dans un troisième état de fonctionnement (BS3) dans lequel le moteur à courant continu (BLDC) est commandé de manière à s'arrêter, dans lequel le dispositif de commande (CTL) est conçu pour délivrer, dans le troisième état de fonctionnement (BS3), la tension triphasée continument alternative avec une fréquence décroissante, aux enroulements de stator du moteur à courant continu (BLDC).

9. Table selon l'une quelconque des revendications 1 à 8, dans laquelle le moteur à courant continu (BLDC) est prévu pour entraîner une broche (SP) qui est appropriée pour convertir une rotation en le mouvement linéaire.

10. Table selon la revendication 9, dans laquelle le moteur à courant continu (BLDC) est prévu pour entraîner la broche (SP) au moyen d'un train d'engrenages (GR), notamment d'un train planétaire, ou pour entraîner directement la broche (SP), notamment sans train d'engrenages.

11. Table selon l'une quelconque des revendications 1 à 10, comprenant en outre un moyen de maintien qui est conçu pour empêcher le mouvement linéaire de l'entraînement linéaire dans un état de repos.

12. Table selon l'une quelconque des revendications 1 à 11, dans laquelle le moteur à courant continu (BLDC) comporte un rotor extérieur.

13. Table réglable en hauteur (TBL) comportant au moins deux entraînements linéaires selon l'une quelconque des revendications 1 à 12, dans laquelle les dispositifs de commande des au moins deux entraînements linéaires (LA1, LA2) sont raccordés à un système de bus (BUS) à l'aide duquel des signaux de commande destinés aux entraînements linéaires (LA1, LA2) peuvent être transmis.

14. Table (TBL) selon la revendication 13, dans laquelle une alimentation en énergie (PWR) peut être raccordée au système de bus (BUS) pour les au moins deux entraînements linéaires (LA1, LA2).

15. Table réglable en hauteur selon l'une quelconque des revendications 1 à 12, comprenant un moteur à courant continu sans balai (BLDC) qui est conçu pour produire un mouvement linéaire d'un entraînement direct d'une table réglable en hauteur, notamment d'un entraînement sans transmission, comportant au moins cinq paires de pôles et comportant un dispositif de commande (CTL) destiné à commander le moteur à courant continu sans balai.
